(19) Europäisches Patentamt
European Patent Office
Office européen des brevets

(11) Numéro de publication: **0 251 934 B1**

(12) **FASCICULE DE BREVET EUROPEEN**

(45) Date de publication de fascicule du brevet: **12.01.94**

(51) Int. Cl.⁵: **G01N 27/12**

(21) Numéro de dépôt: **87401556.3**

(22) Date de dépôt: **02.07.87**

(54) **Procédé et dispositif de détection d'espèces moléculaires ou ioniques.**

(30) Priorité: **03.07.86 FR 8609677**

(43) Date de publication de la demande:
**07.01.88 Bulletin 88/01**

(45) Mention de la délivrance du brevet:
**12.01.94 Bulletin 94/02**

(84) Etats contractants désignés:
**DE FR GB NL**

(56) Documents cités:
**EP-A- 0 161 987**
**GB-A- 1 203 126**
**US-A- 4 632 800**

**IEE PROCEEDINGS, Sections A-I, vol. 132, no. 3, partie I, juin 1985, pages 151-156, Old Woking, Surrey, GB; R.H. TREDGOLD et al.: "Gas sensors made from Langmuir-Blodgett film of porphyrins"**

**THIN SOLID FILMS, vol. 99, 1983, pages 33-40, Elsevier Sequoia, Lausanne, CH; A. RUAUDEL-TEIXIER et al.: "Langmuir-Blodgett films of pure porphyrins"**

(73) Titulaire: **COMMISSARIAT A L'ENERGIE ATOMIQUE**
**31/33, rue de la Fédération**
**F-75015 Paris Cédex 15(FR)**

(72) Inventeur: **Barraud, André**
**40, rue des Clozeaux**
**F-91440 Bures Sur Yvette(FR)**
Inventeur: **Derost, Gisèle**
**22, rue Francisco Ferrer**
**F-78210 Saint-Cyr-L'Ecole(FR)**
Inventeur: **Henrion, Laurence**
**3 Cours Des Longs Près**
**F-92100 Boulogne(FR)**
Inventeur: **Ruaudel-Teixier, Annie**
**14, Allée des Fondaisons**
**F-91370 Verrières Le Buisson(FR)**

(74) Mandataire: **Mongrédien, André et al**
**c/o BREVATOME**
**25, rue de Ponthieu**
**F-75008 Paris (FR)**

EP 0 251 934 B1

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

**IEEE TRANSACTIONS ON ELECTRONIC DEVICES, vol. ED-32, no. 7, juillet 1985, pages 1170-1174, NY, US; H. WOHLTJEN: "A Vapor-sensitive chemiresistor fabricated with planar microelectrodes and Langmuir-Blodgett organic semiconductor film"**

## Description

La présente invention a pour objet un procédé et un dispositif de détection d'espèces moléculaires ou ioniques par un mécanisme mettant en jeu des transferts de charge.

De façon plus précise, elle concerne des détecteurs comportant comme molécules actives des molécules susceptibles de transférer ou de recevoir une charge lorsqu'elles sont en contact avec l'espèce moléculaire ou ionique à détecter. Le principe de fonctionnement de ces détecteurs est donc basé sur la réalisation de réactions d'oxydoréduction. Celles-ci peuvent se traduire par une modification de la conductivité électrique et/ou de la couleur des molécules actives et cette modification peut être repérée par des moyens classiques de mesure de résistance électrique ou d'absorption optique.

Depuis quelques années, on a développé des détecteurs de ce type pour contrôler la présence dans un gaz d'espèces moléculaires telles que $NO_2$. L'article de S. Baker et al publié dans IEE Proceedings, vol. 130, Pt I, n°5, octobre 1983, pp.260-263, illustre un détecteur de ce type dans lequel on utilise comme molécule active une phtalocyanine de cuivre de formule : [Cu Pc tris ($CH_2NC_3H_7$ -iso)].

Cette phtalocyanine a l'inconvénient de ne pouvoir être déposée en couches monomoléculaires organisées. De ce fait, les performances du détecteur sont réduites et les réactions entre l'espéce chimique détecter et les molécules actives sont limitées à des phénomènes d'adsorption et de désorption sur les sites moléculaires de la surface du film.

La présente invention a précisément pour objet un procédé et un dispositif de détection d'espèces moléculaires ou ioniques, qui permettent d'obtenir une sensibilité améliorée et des temps de réponse raccourcis tout en étant adaptés à la détection de quantités variables d'espèces moléculaires ou ioniques.

Le procédé consiste :

a) - à mettre en contact un milieu gazeux ou liquide contenant l'espèce à détecter avec un film comprenant au moins une couche monomoléculaire d'un composé amphiphile choisi parmi les complexes à transfert de charge de tétracyanoquinodiméthane (TCNQ) et les sels de tétracyanoquinodiméthane (TCNQ) conducteurs de l'électricité ou précurseurs de complexes à transfert de charge conducteurs de l'électricité,

b) - à déterminer la variation de l'une des propriétés physiques du film.

Généralement le film est formé de plusieurs couches monomoléculaires. Dans ce cas, on utilise le plus souvent plusieurs couches monomoléculaires du même composé.

On peut toutefois utiliser aussi un film formé de couches monomoléculaires constituées alternativement par une couche monomoléculaire dudit composé et une couche monomoléculaire d'un autre composé amphiphile.

Dans l'invention, on choisit la nature des composés utilisés pour la réalisation des couches monomoléculaires en fonction de l'espèce chimique à détecter.

Les espèces chimiques à détecter peuvent être constituées par des molécules ou des ions capables de donner lieu à des réactions d'oxydoréduction. Ces espèces peuvent se trouver dans un milieu gazeux ou liquide, par exemple dans une solution aqueuse, dans de l'air, ou dans d'autres gaz. Lors de la mise en contact du milieu gazeux ou liquide avec le film, la réaction d'oxydoréduction aura lieu et elle entraïnera une modification des propriétés physiques du film.

A titre d'exemple d'espèces chimiques susceptibles d'être détectées en milieu gazeux par le procédé de l'invention, on peut citer les halogènes en particulier l'iode, l'oxygène, les composés fluorés tels que $AsF_5$, $BF_3$ et $PF_5$, les oxydes d'azote de formule $NO_z$ dans laquelle z est un nombre allant de 1 à 3, l'ammoniac et le benzène. Les espèces chimiques qui peuvent être détectées en milieu liquide, sont par exemple les acides comme l'acide chlorhydrique et l'acide acétique.

Lorsqu'on utilise un film formé alternativement de couches monomoléculaires de composés différents, le second composé peut être également un complexe à transfert de charge de TCNQ ou un sel de TCNQ conducteur de l'électricité ou précurseur d'un complexe transfert de charge conducteur, mais il peut égalment être constitué par d'autres composés amphiphiles conducteurs ou isolants tels que l'acide béhénique.

On précise que l'on entend par composé amphiphile ou amphipathique des molécules organiques possédant une partie hydrophobe, c'est-à-dire une partie ayant une répulsion pour les liquides polaires tels que l'eau, et une partie hydrophile, c'est-à-dire une partie ayant une affinité pour les liquides polaires tels que l'eau.

Dans le procédé de l'invention, on utilise des complexes organiques à transfert de charge de TCNQ ou des sels de TCNQ conducteurs de l'électricité ou précurseurs de complexes organiques à transfert de charge conducteurs de l'électricité rendus amphiphiles, qui comportent par exemple au moins un substituant hydrocarboné saturé ou insaturé d'au moins 12 atomes de carbone et au moins un groupement

polaire.

Les composés utilisables dans l'invention sont : les complexes organiques à transfert de charge de TCNQ et les sels de TCNQ dans lesquels il se produit un déplacement de l'équilibre sous l'action de l'espèce à détecter.

Ces composés sont conducteurs de l'électricité ou précurseurs de complexes à transfert de charge conducteurs de l'électricité.

On rappelle que les complexes à transfert de charge sont formés par l'association de deux molécules dont l'une, A, agit comme accepteur d'électrons et l'autre, D, agit comme donneur d'électrons. On peut représenter cette réaction de la façon suivante :

$$mA + nD \rightarrow A_m{}^{-\rho} D_n{}^{+\rho}$$

m et n représentant les nombres respectifs de molécules et $\rho$ le transfert de charge correspondant à la proportion d'électrons transférés.

Si m = n, on a une stoechiométrie simple et si m est différent de n, on a une stoechiométrie complexe.

Si $\rho$ est sensiblement égal à 0, le complexe est un complexe moléculaire à état fondamental neutre.

Si $\rho$ est égal à 1, c'est un vrai composé ionique avec une charge électrique par molécule D ou A, et si $\rho$ est inférieur à 1, il y a moins de charges électriques que de molécules présentes. On a ainsi un composé à valence mixte, condition nécessaire pour obtenir un conducteur organique. On peut alors distinguer :

1) - les vrais complexes à transfert de charge dans lesquels il y a transfert d'un électron du donneur à l'accepteur ; ces électrons célibataires se trouvent alors sur des orbitales $\pi$ (complexes $\pi$-$\pi$) ; et

2) - les sels d'ions radicalaires dans lesquels un seul des ions est radicalaire, le contre-ion étant diamagnétique.

Des complexes de ce type sont en particulier décrits dans : Annales de Physique, 1976, tome 1, n° 4-5, pages 145 à 256 et dans Journal de Chimie Physique, 1982, 79, n°4.

Les complexes à transfert de charge de TCNQ et les sels de TCNQ conducteurs de l'électricité ou précurseurs de complexes conducteurs de l'électricité utilisables dans l'invention peuvent être les composés décrits dans les demandes de brevet européens EP-A-161 987 et EP-A-165 111 déposées au nom du Commissariat à l'Energie Atomique.

Ces complexes et ces sels amphiphiles de TCNQ peuvent répondre à la formule :

$DA_xX_y$ (I)

dans laquelle D représente un groupe organique donneur d'électrons monomérique, A représente le 7,7,8,8-tétracyanoquinodiméthane ou l'un de ses dérivés substitués, X représente un accepteur d'électrons non amphiphile choisi parmi les acides de Lewis, x est Un nombre égal ou supérieur à 1 et y est égal à 0 ou est un nombre supérieur à 0, l'un au moins des groupes D et A étant amphiphile et comportant au moins un substituant hydrocarboné saturé ou insaturé d'au moins 12 atomes de carbone.

Généralement, x et y peuvent prendre des valeurs allant jusqu'à 20.

De préférence, le substituant hydrocarboné a de 14 à 30 atomes de carbone.

Dans la formule précitée, X représente avantageusement un acide de Lewis choisi parmi $PF_6^-$, $ClO_4^-$, $BF_4^-$, $ReO_4^-$, $IO_4^-$, $FSO_3^-$, $AsF_6^-$, $AsF_4^-$, $Br^-$, $Cl^-$, $MnCl_6^-$, les iodures et les oxydes d'azote de formule $NO_z$ avec z variant de 1 à 3.

Lorsque le groupe organique donneur d'électrons monomérique D est un groupe amphiphile, celui-ci peut être constitué par une base aliphatique, aromatique ou hétérocyclique comportant au moins un substituant hydrocarboné, saturé ou insaturé ayant au moins 12 atomes de carbone.

Parmi les bases aliphatiques susceptibles d'être utilisées, on peut citer les groupes ammonium quaternaire de formule :

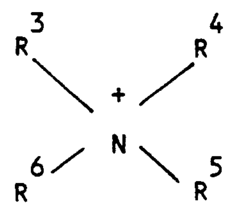

dans laquelle $R^3$, $R^4$ , $R^5$ et $R^6$ qui peuvent être identiques ou différents, sont des radicaux alkyle ou des chaînes hydrocarbonées comportant éventuellement une ou plusieurs doubles et/ou triples liaisons, l'un au moins des groupes $R^3$, $R^4$ , $R^5$ et $R^6$ ayant au moins 12 atomes de carbone.

Les bases aromatiques susceptibles d'être utilisées peuvent être avantageusement constituées par des groupes ammonium quaternaire dérivés de l'aniline ou de dérivés substitués de l'aniline.

Les bases hétérocycliques susceptibles d'être utilisées peuvent être constituées par des groupements ammonium quaternaire dérivés des pyridines, des pipéridines, des bipyridines, des benzopyridines par exemple des quinoléines, des isoquinoléines, des acridines, des phénazines et des phénanthrolines.

A titre d'exemple de telles bases, on peut citer les N-alkylisonicotinates d'alkyle. Celles-ci peuvent être obtenues en estérifiant l'acide pyridine-4-carboxylique par un alcool gras de formule R'OH dans laquelle R' est un radical alkyle de 16 à 30 atomes de carbone, et en quaternisant ensuite l'ester par un halogénure d'alkyle de formule $C_nH_{2n+1}X$ dans laquelle n est un nombre entier de 1 à 4 et X représente Cl, Br ou I.

Pour obtenir ensuite le N-alkylisonicotinate d'alkyle, TCNQ, on fait réagir l'isonicotinate avec le sel de lithium du tétracyanoquinodiméthane.

Le groupe D peut aussi être constitué par le tétrathiofulvalène (TTF) ou le tétrasélénafulvalène (TSF) ou des membres dérivés de cette famille comme par exemple le tétraméthyl-TTF (TMTTF), le TMTSF, le bis-éthyl-dithio-TTF (BEDT-TTF), etc.

Le groupe D peut aussi représenter une base hétérocyclique comportant plusieurs hétéro-atomes de nature différente, par exemple des atomes d'azote et de soufre. A titre d'exemple de telles bases hétérocycliques, on peut citer les N-alkylbenzothiazoles et leurs dérivés substitués, et les N-alkylindoléniniumtriméthinecyanines et leurs dérivés substitués.

Le groupe D peutêtre également constitué de dérivés du type sulfonium de phosphonium, par exemple des groupes trialkyl sulfonium et tétraalkylphosphonium.

Les trialkylsulfonium, TCNQ peuvent être obtenus en quaternisant un sulfure de dialkyle de formule :

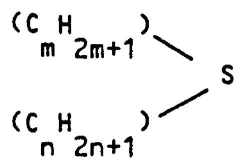

dans laquelle n et m sont des nombres entiers allant de 2 à 30 par un halogénure d'alkyle de formule $C_{n'}H_{2n'+1}X$ où n' est un nombre entier allant de 16 à 30 et X représente Cl, Br ou I, pour obtenir un halogénure de trialkylsulfonium que l'on fait réagir ensuite avec le sel de lithium du tétracyanoquinodiméthane, ce qui permet d'obtenir les trialkylsulfonium, TCNQ.

Les tétraalkylphosphonium, TCNQ peuvent être obtenus à partir des trialkylphosphinesde formule générale $(C_nH_{2n+1})_3P$ dans laquelle n est un nombre entier allant de 2 à 30, les trois chaînes alkyle pouvant être différentes, en quaternisant ces trialkylphosphines en milieu anhydre par un halogénure d'alkyle de formule $C_{n'}H_{2n'+1}X$ dans laquelle n′ est un nombre entier allant de 16 à 30 et X représente Cl, Br ou I pour obtenir l'halogénure de tétraalkylphosphonium que l'on fait réagir ensuite avec le sel de lithium du tétracyanoquinodiméthane pour obtenir le tétraalkylphosphonium, TCNQ correspondant.

On précise que dans le présent texte le terme "radical hydrocarboné saturé ou insaturé" désigne des radicaux formés d'atomes de carbone et d'hydrogène comportant éventuellement une ou plusieurs doubles et/ou triples liaisons. Ceux-ci peuvent être reliés au groupe accepteur d'électrons A et/ou au groupe donneur d'électrons D par une simple liaison, un hétéro atome ou toute autre fonction organique (ester, ...).

Dans ces complexes amphiphiles, le groupe A est le TCNQ ou l'un de ses dérivés substitués ou de la famille des N,N′-dicyanoquinodiimines.

A titre d'exemples de tels dérivés, on peut citer des dérivés halogénés tels que les dérivés fluorés, des dérivés alcoxylés et des dérivés alkylés, comme par exemple le TCNQ monoalkylé en $C_{18}$ ou $C_{22}$.

Les complexes et sels de TCNQ de formule $DA_x$ comme les alkylpyridinium tétracyanoquinodiméthane, et les alkylquinolinium-TCNQ, les alkylammonium-TCNQ, les alkylsulfonium-TCNQ, les alkylphosphonium-TCNQ et les N-alkylisonicotinate d'alkyle-TCNQ peuvent être utilisés en particulier pour la détection d'espèces chimiques capables de réagir avec les complexes de formule $DA_x$ pour former les complexes de formule $DA_xX_y$.

A titre d'exemple, les espèces peuvent être les halogènes comme l'iode, les composés fluorés tels que $AsF_5$, $BF_3$et $PF_5$, et les oxydes d'azote de formule $NO_z$ avec z allant de 1 à 3.

Dans ce cas, les complexes de départ qui n'étaient pas conducteurs de l'électricité deviennent conducteurs par réaction avec l'espèce à détecter, et l'on peut vérifier la présence ou non de l'espèce à

détecter en déterminant la variation de résistance électrique du film.

Toutefois, dans la plupart des cas, cette réaction de l'espèce avec le film, conduit aussi à un changement de la couleur du film que l'on peut suivre en déterminant l'absorption optique.

Les complexes à transfert de charge conducteurs de l'électricité de formule $DA_xX_y$ peuvent être utilisés pour la détection d'espèces chimiques réagissant avec ces complexes pour les rendre isolants ou pour améliorer leur conductivité électrique.

A titre d'exemple, les espèces à détecter peuvent être l'ammoniac, les oxydes d'azote de formule $NO_z$ et le benzène. Les complexes utilisés peuvent être en partculier des iodures d'alkylpyridinium, TCNQ.

On peut aussi utiliser ces complexes en association avec des molécules amphiphiles non conductrices de l'électricité, c'est le cas par exemple de films constitués de couches monomoléculaires formées alternativement d'alkylpyridinium-TCNQ et d'alcool béhénique.

Les complexes à transfert de charge décrits ci-dessus peuvent être préparés par des procédés classiques tels que celui décrit par L.R. Melby et al. dans Journ. of Am. Chem. Soc., vol.84 (1962), pp. 3374-3387.

L'utilisation dans l'invention d'un film formé de couches monomoléculaires permet d'obtenir de nombreux avantages.

En effet, la sensibilité est améliorée et les temps de réponse sont raccourcis en raison de la structure et de l'organisation des molécules dans le film. Le film peut être adapté la quantité d'espèces à détecter, par exemple en augmentant le nombre de couches monomoléculaires avec la quantité détecter afin d'obtenir une réaction stoechiométrique des molécules du film avec l'espèce à détecter. Dans une telle structure, les espèces moléculaires ou ioniques diffusent à l'intérieur du film ; on obtient ainsi un phénomène de masse et non le seul phénomène de surface observé avec la phtalocyanine de cuivre décrite par Baker qui n'est pas une molécule amphiphile et ne peut, de ce fait, être déposée par la méthode de Langmuir Blodgett en couches monomoléculaires organisées.

L'invention a également pour objet des dispositifs de détection utilisant les complexes à transfert de charge de TCNQ et les sels de TCNQ conducteurs de l'électricité ou précurseurs de complexes à transfert de charge conducteurs de l'électricité.

Ces dispositifs comprennent un support revêtu d'un film comprenant au moins une couche monomoléculaire constituée des composés amphiphiles décrits ci-dessus et ils peuvent être conçus pour réaliser la détection en déterminant la résistance électrique du film.

Dans ce cas, le dispositif comprend des contacts électriques permettant de réaliser la mesure électrique du film, et le support est en matériau isolant électrique.

Ces supports sontgénéralement des supports amorphes constitués par exemple en verre, en $F_2$ Ca ou en quartz. On peut aussi utiliser des supports en polymère organique, par exemple en mylar.

Le dispositif de détection peut aussi comprendre une couche intermédiaire de promoteur d'adhérence disposée entre le support et le film formé de la ou des couches monomoléculaires.

Ce promoteur d'adhérence permet d'améliorer l'adhérence du film sur le support lorsque ce dernier ne présente pas une affinité suffisante pour les molécules constituant les couches monomoléculaires.

La couche intermédiaire de ce promoteur d'adhérence est de préférence constituée par une ou plusieurs couches monomoléculaires d'un composé amphiphile qui peut être en particulier un acide gras tel que l'acide ω-tricosénoïque, l'acide béhénique ou d'autres molécules de composés amphiphiles permettant d'établir la liaison entre le support et les molécules actives.

Pour réaliser les détecteurs de l'invention, on dépose les couches monomoléculaires sur le support par la méthode connue de Langmuir Blodgett déçrite dans J. of Am. Chem. Soc., vol.57 (1935), pp. 1007-1010.

Les dispositifs utilisés pour ces dépôts sont des dispositifs classiques. On peut utiliser en particulier la cuve décrite dans la demande de brevet français FR-A-2 556 244 ou la cuve décrite dans le brevet français FR-A-2 341 199.

Lorsqu'on veut déposer des couches alternées, c'est-à-dire des couches monomoléculaires successives réalisées avec des molécules différentes, on peut utiliser la cuve décrite dans le brevet français FR-A-2 541 936.

Lorsque le dispositif de détection comprend des contacts électriques pour la mesure d'une propriété électrique du film, ceux-ci sont généralement réalisés sur le support isolant avant le dépôt des couches.

Ceci peut être effectué en déposant sur certaines parties du support isolant, c'est-à-dire aux emplacements choisis pour la réalisation des électrodes, des bandes de carbone ou d'or, que l'on recouvre ensuite d'une pâte conductrice telle qu'une pâte d'argent ou d'or dans laquelle on noie un fil métallique conducteur.

On peut aussi déposer tout d'abord sur le support isolant la pâte conductrice selon les tracés voulus et recouvrir ensuite le substrat aux endroits délimitant les électrodes d'une couche de carbone ou d'or.

Avec le dispositif de détection de l'invention, on peut suivre différentes propriétés du film qui sont généralement les propriétés électriques et/ou les propriétés optiques.

Dans le cas où l'on veut suivre une propriété électrique telle que la conductivité, on peut avoir trois types de variations selon la nature des molécules utilisées pour la réalisation du film.

1°)- le film peut être conducteur et devenir après réaction avec l'espèce à détecter, soit meilleur conducteur, soit moins bon conducteur,

2°)- le film peut être conducteur mais devenir isolant après réaction avec l'espèce à détecter,

3°)- le film peut être isolant et devenir conducteur après réaction avec l'espèce à détecter.

Dans tous les cas, il convient donc de pouvoir mesurer les variations de résistance du film.

Pour réaliser cette mesure, on peut utiliser différents montages. Généralement, afin d'améliorer la précision on effectue une mesure différentielle entre un détecteur placé dans le milieu à contrôler et un détecteur placé dans un milieu de référence. Ceci peut être effectué en utilisant un seul support sur lequel sont disposés un premier film de référence en contact avec l'air ou un gaz de référence, et un second film identique en contact avec le milieu contenant l'espèce à détecter.

Selon l'invention, la propriété physique à vérifier peut être aussi une propriété optique telle qu'un changement de couleur. Dans ce cas, on peut utiliser des mesures d'absorption optique à une ou plusieurs longueurs d'onde caractéristiques des molécules qui constituent le film, ces longueurs d'onde pouvant correspondre à l'apparition d'un complexe, à la disparition d'une bande d'absorption ou au déplacement de bandes d'absorption dû à la réaction d'oxydoréduction.

Pour chaque longueur d'onde, on utilise de préférence une diode électroluminescente munie éventuellement de filtres et un capteur photoélectrique.

En vue d'améliorer la sélectivité et de se protéger des espèces indésirables, on peut faire la mesure simultanément à plusieurs longueurs d'onde en utilisant un jeu de diodes électroluminescentes et de cellules photoélectriques fonctionnant, soit sur le même film, soit sur plusieurs films, qui peuvent être disposés sur le même support isolant.

Comme précédemment, on peut aussi effectuer chacune des mesures sous la forme d'une mesure différentielle en utilisant deux dispositifs de détection, dont l'un est en contact avec l'espèce chimique à détecter, et l'autre est en contact avec un milieu de référence.

Selon l'invention, on peut aussi réaliser la détection en mesurant simultanément les variations des propriétés optiques et des propriétés électriques. Dans ce cas, on peut utiliser plusieurs dispositifs de détection différents.

Dans le cas, où le changement de couleur du film par réaction avec l'espèce à détecter est très net, on peut simplifier le mode de détection en utilisant un film déposé sur un support et des étalons indiquant le changement de couleur du film en fonction des espèces à détecter et de leurs quantités. Dans ce cas, il suffit alors de comparer le film avec la barrette d'étalons.

D'autres caractéristiques et avantages de l'invention apparaîtront mieux à la lecture des exemples suivants, donnés bien entendu à titre illustratif et non limitatif en référence au dessin annexé sur lequel :

- la figure 1 est une vue en perspective d'un dispositif de mesure différentielle d'une propriété électrique d'un capteur selon l'invention, et
- la figure 2 représente schématiquement le montage différentiel des deux détecteurs du dispositif de la figure 1.

EXEMPLE 1

Cet exemple illustre l'utilisation d'un détecteur comportant un film formé de couches monomoléculaires de N-docosylpyridinium, $TCNQ^-$ pour la détection de l'iode.

On prépare le N-docosylpyridinium $TCNQ^-$ par métathèse à partir de l'iodure de N-docosylpyridinium et du sel de lithium de TCNQ en opérant en milieu alcoolique et en recristallisant ensuite le complexe dans l'éthanol.

Sur une plaquette rectangulaire en fluorine, on dispose un cache de façon à masquer la partie centrale de la plaquette. On dépose ensuite du carbone par évaporation afin d'obtenir deux bandes parallèles de carbone distantes de 8 mm sur les deux bords opposés de la plaquette. On forme ensuite des contacts électriques sur les bandes de carbone en déposant l'une des extrémités du support sur chaque bande de carbone, de la pâte conductrice d'argent commercialisée sous le nom Epotek et on noie dans cette pâte un fil métallique pour former les contacts électriques. On élimine ensuite le cache, et on dépose sur toute la surface de la plaquette deux couches monomoléculaires d'un promoteur d'adhérence constitué par de l'acide béhénique en utilisant la méthode Langmuir Blodgett et la cuve Optilas LB 105 décrite dans le brevet français FR-A-2 556 244. L'acide béhénique est en solution $10^{-3}$ mol.$l^{-1}$ dans le chloroforme et il est

compressé progressivement pour le dépôt à une pression de 35 $mN.m^{-1}$.

Après cette opération, on réalise le dépôt de 20 couches du complexe amphiphile N-docosylpyridinium, $TCNQ^-$ en utilisant le même appareillage et une solution à $10^{-3}$ $mol.l^{-1}$ du complexe dans un mélange dichlorométhane-éthanol et en compressant progressivement la couche jusqu'à une pression de 35$mN.m^{-1}$.

Après le dépôt des 20 couches, on mesure la résistance du film aux bornes des deux bandes de carbone et ceci montre que le film est isolant, la résistance étant supérieure à $10^{10}$ ohms.

On soumet alors le film des vapeurs d'iode et la résistance électrique du film chute instantanément et se stabilise des valeurs allant de $10^7$ ohms à $60.10^7$ ohms pour des teneurs en iode allant de 20 à 100 ppm. Ces mesures correspondent à une résistivité de l'ordre de $10^2$ ohms.cm.

On peut aussi détecter la présence d'iode par mesure optique. En effet, en présence d'iode, la densité optique du film à 675 nm (bande d'absorption qui correspond au dimère $TCNQ_2^{2-}$ ) chute progressivement et le produit obtenu absorbe sur l'ensemble du spectre.

EXEMPLE 2

Cet exemple illustre l'utilisation du détecteur de l'exemple 1 pour la détection de vapeurs de $NO_z$.

Dans ce cas, pour des quantités de $NO_z$ de 0,5%, on obtient une résistance de $10^7$ ohms, ce qui donne une résistivité de $10^2$ ohms.cm et correspond à un film bon conducteur.

On peut aussi effectuer la mesure en observant le changement de couleur du film qui passe du bleu au violet.

EXEMPLE 3

Dans cet exemple, on utilise le N-docosylpyridinium, $TCNQ^-$ pour la détection d'iode, d'ammoniac ou d'oxydes d'azote en utilisant un montage particulier pour faire une mesure différentielle. Dans ce cas, on forme sur la plaquette isolante en fluorine de l'exemple 1, deux détecteurs afin d'avoir sur le même support le détecteur de référence et le détecteur proprement dit.

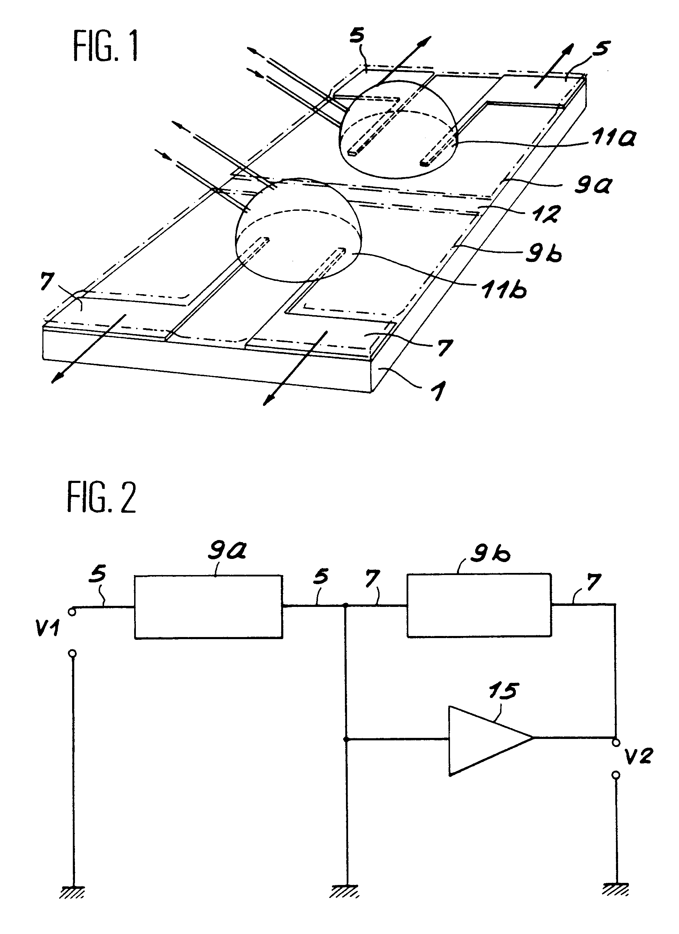

Ce montage est représenté sur la figure 1 où l'on voit que le support isolant 1 est muni à chaque extrémité de la plaquette de deux jeux de contacts électriques 5 et 7. La plaquette est recouverte de 2 couches monomoléculaires de N-docosylpyridinium, $TCNQ^-$ qui forment le film 9 qui a été séparé en deux parties qui sont respectivement les parties 9a et 9b correspondant respectivement au détecteur de référence et au détecteur proprement dit.

Sur la partie 9a du film, on peut disposer une capsule 11a en réalisant l'étanchéité au moyen d'un joint Viton VT 70 et cette capsule est munie de conduites d'amenée et de sortie permettant de faire circuler dans celle-ci un gaz de référence tel que l'azote. Sur la partie 9b du film est également disposée une capsule analogue 11b qui est montée de façon étanche sur le film au moyen d'un joint Viton et qui est munie de conduites d'amenée et de sortie de gaz permettant de mettre en circulation dans celle-ci le milieu gazeux contenant l'espèce à détecter.

Pour réaliser ce dispositif, on dépose tout d'abord sur le support isolant des lignes de pâte d'argent qui permettent de prendre les contacts électriques à l'extérieur des capsules 11a et 11b. On dépose ensuite par évaporation du carbone ou de l'or avec des caches pour délimiter les deux jeux d'électrodes 5 et 7, puis on dépose sur la plaquette deux couches monomoléculaires de N-docosylpyridinium, $TCNQ^-$ comme dans l'exemple 1. Les deux détecteurs du dispositif de la figure 1 sont reliés à un circuit électrique selon le montage différentiel de la figure 2. Sur cette figure 2, on a repris les mêmes références que celles de la figure 1. Ainsi, on voit le détecteur de référence 9a et le détecteur proprement dit 9b montés par l'intermédiaire de leurs bornes de sortie 5 et 7 aux bornes de l'amplificateur 15, ce qui permet de mesurer les tensions $V_1$ et $V_2$ aux bornes des deux détecteurs.

Les mesures effectuées au départ sur les deux jeux d'électrodes montrent que le film est isolant. On dope alors le film à l'iode et on obtient ainsi un film conducteur ayant une résistance de $2.10^8$ ohms. On isole ensuite les deux détecteurs en plaçant les capsules sur le film et en rayant le film entre les deux capsules (en 12), puis on fait passer le mélange gazeux contrôler dans la capsule 11b et un gaz inerte dans la capsule 11a. Lorsque le gaz à détecter est de l'ammoniac, la résistance augmente très rapidement dans le détecteur 11a pour lequel elle est de $6.10^8$ ohms alors qu'elle reste $2.10^8$ ohms dans le détecteur de référence. Si on continue l'action de l'ammoniac, la résistance augmente encore jusqu'à $10^9$ -$10^{10}$ ohms et le film devient isolant. Par ailleurs, le film qui était vert sous l'action de l'iode redevient bleu.

En revanche, si l'on utilise ce montage pour détecter un oxyde d'azote, la résistance diminue dans le détecteur car la conductivité du film soumis à l'oxyde d'azote augmente.

EXEMPLE 4

Dans cet exemple, on utilise un film formé de couches alternées de N-docosylpyridinium, $TCNQ^-$ et d'alcool béhénique, ayant 16 couches au total, qui a été dopé à l'iode, pour détecter des vapeurs de benzène.

On utilise un support isolant en quartz et on réalise le dépôt des couches alternées de N-docosylpyridinium, $TCNQ^-$ et d'alcool béhénique en utilisant la cuve décrite dans le brevet français FR-A-2 541 936. On dope ensuite le film à l'iode et on mesure sa résistance qui est de $5{,}3.10^8$ ohms.

Lorsqu'on soumet ensuite le film à des vapeurs de benzène, on obtient une résistance électrique de $6{,}1.10^8$ ohms, et si l'on poursuit cette exposition aux vapeurs de benzène, le film devient isolant.

On peut aussi détecter les vapeurs de benzène en observant le changement de couleur du film qui passe du violet au bleu pâle ; la densité optique chute fortement à 395 nm et il apparaît un épaulement à 410 nm.

EXEMPLE 5

Dans cet exemple, on utilise un film de N-docosylquinolinium, TCNQ pour la détection de produits fluorés tels que $AsF_5$, $BF_3$ et $PF_5$.

On dépose tout d'abord sur un support en verre par la méthode de Langmuir Blodgett deux couches d'acide ω-tricosénoïque à partir d'une solution à $10^{-3}$ $mol.l^{-1}$ d'acide ω-tricosénoïque dans le chloroforme en réalisant la compression à une valeur de 32,5 $mN.m^{-1}$. On prépare ensuite du N-docosylquinolinium, TCNQ en faisant réagir 1 mmol d'iodure de N-docosylquinolinium avec 1mmole du sel de lithium du TCNQ. On prépare une solution à 10-3 $mol.l^{-1}$ de ce complexe dans du chloroforme et on utilise cette solution pour déposer quatre couches monomoléculaires de N-docosylquinolinium, TCNQ sur le support en verre revêtu des deux couches d'acide ω-tricosénoïque en réalisant la compression à une valeur de 30 $mN.m^{-1}$.

Lorsqu'on met ensuite en contact le film ainsi obtenu avec des traces de $AsF_5$ ou d'autres produits fluorés tels que $BF_3$ ou $PF_5$ dans une enceinte à vide, on observe un changement de couleur. En effet, le film qui était bleu, devient jaune instantanément. On peut observer cette modification des propriétés optiques du film à 680 nm et à 380 nm.

EXEMPLE 6

Dans cet exemple, on utilise le N-octadécylpyridinium, TCNQ pour la détection de vapeurs de $NO_z$.

On synthétise tout d'abord ce complexe en faisant réagir à chaud dans une solution alcoolique, l'iodure de N-octadécyl-pyridinium avec le sel de lithium du tétracyanoquinodiméthane.

On obtient ainsi, après refroidissement, une poudre que l'on lave et que l'on recristallise. On redissout ensuite cette poudre dans l'acétonitrile avec un équivalent de TCNQ. Un complexe noir cristallise à froid. Il est conducteur de l'électricité et répond à la formule :

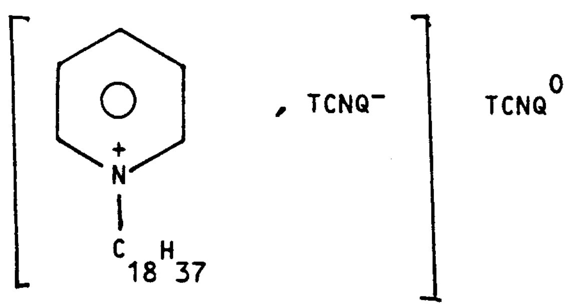

On prépare ensuite comme dans l'exemple 1, une plaquette rectangulaire en fluorine munie de contacts électriques et de deux couches monomoléculaires d'acide béhénique et on dépose sur cette plaquette 30 couches monomoléculaires superposées du sel complexe N-octadécylpyridinium, TCNQ en utilisant une solution à $5.10^{-4}$ mol/l de ce sel complexe dans du chloroforme et en comprimant à une pression de 32,5 $mN.m^{-1}$.

On détermine alors la conductivité électrique du film, puis on le soumet à de l'air sec contenant 22 ppm de vapeurs de $NO_z$. Dans ces conditions, la variation de conductivité électrique est de 20% en 30s et de 58% en 5 min.

Lorsqu'on soumet le détecteur à de l'air sec contenant 200 ppm de vapeurs de $NO_z$, la variation de conductivité électrique est de 26% en 30s et de 99% en 10 min.

EXEMPLE 7

Dans cet exemple, on utilise le diéthyldocosylsulfonium, TCNQ pour détecter la présence de vapeurs d'iode.

On prépare tout d'abord le diéthyldocosylsulfonium, TCNQ de la façon suivante.

On quaternise par de l'iodure de docosyle du sulfure de diéthyle pour obtenir l'iodure de diéthyldocosylsulfonium. On met ensuite cet iodure dans une solution alcoolique avec un équivalent de sel de lithium du TCNQ. On obtient ainsi des cristaux que l'on recristallise dans l'alcool. Ces cristaux sont constitués par le sel simple de diéthyldocosylsulfonium tétracyanoquinodiméthane de formule :

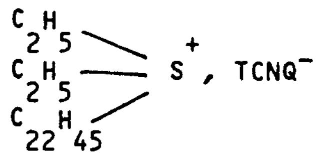

On prépare ensuite comme dans l'exemple 1 une plaquette de fluorine munie de contacts électriques et on dépose sur celle-ci un film formé de 100 couches monomoléculaires de diéthyldocosylsulfonium, TCNQ. Pour réaliser le dépôt du film, on mélange une partie de diéthyldocosylsulfonium, TCNQ avec une partie d'octadécyl urée dans du chloroforme et on réalise la compression à 30 $mN.m^{-1}$. On transfère ainsi 100 couches sur la plaquette en fluorine. Le film obtenu est de couleur bleue et il est isolant.

On le soumet alors à des vapeurs d'iode ; il change de couleur et prend une teinte violacée. Le spectre infrarouge est celui d'un conducteur métallique et on observe une résistivité de $10^2$ ohms.cm.

EXEMPLE 8

Dans cet exemple, on utilise le triéthyldocosylphosphonium, tétracyanoquinodiméthane pour détecter la présence d'iode.

On prépare tout d'abord le bromure de triéthyldocosylphosphonium en faisant réagir la triéthylphosphine avec le bromure de docosyle. On dissout ensuite le bromure de triéthyldocosyl-phosphonium dans de l'alcool et on le fait réagir avec un équivalent de sel de lithium du TCNQ. On obtient ainsi des cristaux que l'on recristallise dans l'alcool, et qui répondent à la formule :

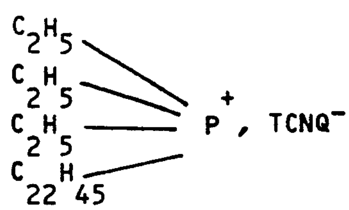

On prépare alors comme dans l'exemple 1 une plaquette en fluorine munie de contacts électriques et on dépose sur celle-ci un film formé de deux couches monomoléculaires de ce sel, en réalisant le dépôt des couches sur la plaquette en fluorine à partir d'une solution du complexe dans du chloroforme et en réalisant la compression à une pression de 25 $mN.m^{-1}$.

Après le dépôt des deux couches, on mesure la résistance du film. On observe ainsi que le film est isolant. Il présente une couleur bleue.

On soumet alors le film des vapeurs d'iode. Sa couleur vire au violet et son spectre infrarouge révèle des propriétés de conducteur électronique.

EXEMPLE 9

Dans cet exemple, on utilise le N-méthylisonicotinate de docosyle pour détecter la présence d'iode.

On prépare tout d'abord le complexe à partir d'acide pyridine-4-carboxylique que l'on estérifie par le docosanol.

On obtient ainsi l'isonicotinate de docosyle que l'on quaternise par de l'iodure de méthyle. On met le sel quaternaire ainsi obtenu en solution alcoolique avec un équivalent de sel de lithium du tétracyanoquinodiméthane. On obtient ainsi le sel de formule :

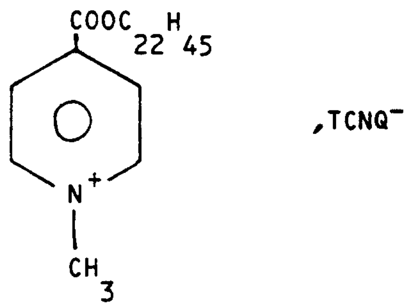

que l'on recristallise dans l'alcool.

On prépare ensuite comme dans l'exemple 1, une plaquette en fluorine munie de contacts électriques et de deux couches d'acide béhénique et on dépose sur celle-ci un film formé de 26 couches monomoléculaires de ce sel à partir d'une solution de celui-ci dans du dichlorométhane à 5% d'éthanol en réalisant la compression sous une pression de 35 $mN.m^{-1}$.

On mesure la résistance du film et on constate que le film est isolant, il est de couleur bleue.

On soumet alors le film des vapeurs d'iode, sa couleur vire au violet, et sa résistance chute instantanément car le film devient conducteur.

EXEMPLE 10

Dans cet exemple, on utilise le triméthyldocosylammonium, TCNQ pour détecter la présence d'iode.

On prépare tout d'abord l'iodure de triméthyldocosylammonium à partir de la triméthylamine en la faisant réagir avec de l'iodure de docosyle et l'on recristallise dans l'alcool. On met alors cet iodure en solution alcoolique avec un équivalent du sel de lithium du tétracyanoquinodiméthane et l'on obtient un précipité du sel simple :

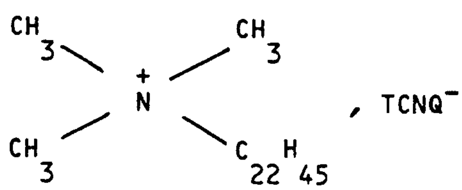

On prépare alors comme dans l'exemple 1 une plaquette en fluorine munie de contacts électriques et de deux couches d'acide béhénique et on dépose sur celle-ci un film formé de six couches monomoléculaires de triméthyldocosylammonium, TCNQ en utilisant une solution du sel dans le chloroforme et en la comprimant sous une pression de 24 $mN.m^{-1}$.

Après le dépôt des six couches, on mesure la résistance du film et on constate que celui-ci est isolant.

On soumet alors le film des vapeurs d'iode. Sa résistance chute instantanément et le film devient conducteur.

## Revendications

**1.** Procédé de détection d'espèces moléculaires ou ioniques, caractérisé en ce qu'il consiste :

a) - à mettre en contact un milieu gazeux ou liquide contenant l'espèce à détecter avec un film comprenant au moins une couche monomoléculaire d'un composé amphiphile choisi parmi les complexes à transfert de charge de tétracyanoquinodiméthane (TCNQ) et les sels de tétracyanoquinodiméthane (TCNQ) conducteurs de l'électricité ou précurseurs de complexes à transfert de charge conducteurs de l'électricité,

b) - à déterminer la variation de la résistance électrique ou de l'absorption optique du film.

**2.** Procédé selon la revendication 1, caractérisé en ce que le film est formé de plusieurs couches monomoléculaires constituées alternativement d'une couche monomoléculaire dudit composé amphiphile choisi parmi les complexes à transfert de charge de TCNQ et les sels de TCNQ conducteurs de l'électricité ou précurseurs de complexes à transfert de charge conducteurs de l'électricité et d'une couche monomoléculaire d'un autre composé amphiphile.

**3.** Procédé selon l'une quelconque des revendications 1 et 2, caractérisé en ce que le composé amphiphile choisi parmi les complexes à transfert de charge et les sels de TCNQ répond à la formule $DA_xX_y$ dans laquelle D représente un groupe organique donneur d'électrons monomérique, A représente le 7,7,8,8-tétracyanoquinodiméthane ou l'un de ses dérivés substitués, X représente un accepteur d'électrons non amphiphile choisi parmi les acides de Lewis, x est un nombre égal ou supérieur à 1 et y est égal à 0 ou est un nombre supérieur à 0, l'un au moins des groupes D et A étant amphiphile et comportant au moins un substituant hydrocarboné saturé ou insaturé d'au moins 12 atomes de carbone.

**4.** Procédé selon la revendication 3, caractérisé en ce que le complexe ou le sel de TCNQ est choisi parmi les alkyl-ammonium, TCNQ, les alkyl-pyridinium, TCNQ, les alkyl-quinolinium, TCNQ, les alkyl-sulfonium, TCNQ, les alkyl-phosphonium, TCNQ et les N-alkylisonicotinates d'alkyle, TCNQ.

**5.** Procédé selon l'une quelconque des revendications 3 et 4, caractérisé en ce que l'espèce à détecter est choisie parmi l'iode, les oxydes d'azote de formule $NO_z$ avec z allant de 1 à 3 et les composés fluorés tels que $AsF_5$, $BF_3$, $PF_5$.

**6.** Procédé selon la revendication 3, caractérisé en ce que le complexe de TCNQ est un iodure d'alkyl-pyridinium TCNQ.

**7.** Procédé selon les revendications 2 et 3, caractérisé en ce que le film est constitué de couches monomoléculaires formées alternativement d'un premier composé constitué par un iodure d'alkyl-pyridinium, TCNQ et d'un second composé constitué par l'alcool béhénique.

**8.** Procédé selon l'une quelconque des revendications 6 et 7, caractérisé en ce que l'espèce à détecter est l'ammoniac, un oxyde d'asote de formule $NO_z$ avec z allant de 1 à 3 ou le benzène.

**9.** Dispositif de détection d'espèces moléculaires ou ioniques, caractérisé en ce qu'il comprend un support revêtu d'un film comprenant au moins une couche monomoléculaire constituée d'un composé amphiphile choisi parmi les complexes à transfert de charge de TCNQ et les sels de TCNQ conducteurs de l'électricité ou précurseurs de complexes à transfert de charge conducteurs de l'électricité et des contacts électriques pour mesurer la résistance électrique du film.

**10.** Dispositif selon la revendication 9, caractérisé en ce que le support est en matériau isolant électrique.

**11.** Dispositif selon l'une quelconque des revendications 9 et 10, caractérisé en ce qu'il comprend une couche intermédiaire de promoteur d'adhérence entre le support isolant et le film.

**12.** Dispositif selon la revendication 11, caractérisé en ce que la couche intermédiaire de promoteur d'adhérence est constituée par au moins une couche monomoléculaire d'acide $\omega$-tricosénoïque.

## Claims

**1.** Process for the detection of molecular or ionic species, characterized in that it comprises:

a) contacting a gaseous or liquid medium containing the species to be detected with a film comprising at least one monomolecular layer of an amphiphilic compound chosen from among the tetracyanoquinodimethane (TCNQ) charge transfer complexes and the tetracyanoquinodimethane (TCNQ) salts, which conduct electricity or are precursors of electricity conducting charge transfer complexes and

b) determining the variation of one of the electrical resistance or optical absorption of the film.

**2.** Process according to claim 1, characterized in that the film is formed from several monomolecular layers alternately constituted by a monomolecular layer of said amphiphilic compound chosen from among the TCNQ charge transfer complexes and the TCNQ salts, which are electricity conductors or precursors of electricity conducting charge transfer complexes and a monomolecular layer of another amphiphilic compound.

**3.** Process according to either of the claims 1 and 2, characterized in that the amphiphilic compound chosen from among the TCNQ salts and charge transfer complexes is in accordance with formula $DA_xX_y$ , in which D represents an organic monomeric electron donor group, A represents 7,7,8,8-tetracyanoquinodimethane or one of its substituted derivatives, X represents a non-amphiphilic electron acceptor chosen from among Lewis acids, x is a number equal to 1 or exceeding 1 and y is equal to 0 or is a number exceeding 0, at least one of the groups D and A being amphiphilic and having at least one saturated or unsaturated hydrocarbon substituent with at least 12 carbon atoms.

**4.** Process according to claim 3, characterized in that the TCNQ salt or complex is chosen from among TCNQ alkylammonium, TCNQ-alkyl-pyridinium, TCNQ alkyl-quinolinium, TCNQ alkyl-sulphonium, TCNQ alkyl-phosphonium and TCNQ alkyl-N-alkylisonicotinates.

**5.** Process according to either of the claims 3 and 4, characterized in that the species to be detected is chosen from among iodine, nitrogen oxides of formula NOz, with z being between 1 and 3 and fluoric compounds such as $AsF_5$ , $BF_3$ and $PF_5$.

**6.** Process according to claim 3, characterized in that the TCNQ complex is a TCNQ alkyl-pyridinium iodide.

**7.** Process according to claims 2 and 3, characterized in that the film is constituted by monomolecular layers formed alternately from a first compound constituted by a TCNQ alkyl-pyridinium iodide and a second compound constituted by behenic alcohol.

**8.** Process according to either of the claims 6 and 7, characterized in that the species to be detected is ammonia, a nitrogen oxide of formula $NO_z$ with z between 1 and 3 or benzene.

**9.** Apparatus for the detection of molecular or ionic species, characterized in that it comprises a support covered With a film comprising at least one monomolecular layer constituted by an amphiphilic compound chosen from among the TCNQ charge transfer complexes and the TCNQ salts, which conduct electricity or are precursors of electricity conducting charge transfer complexes and electric contacts for measuring the electrical resistance of the film.

**10.** Apparatus according to claim 9, characterized in that the support is made from an electrically insulating material.

**11.** Apparatus according to either of the claims 9 and 10, characterized in that it comprises an intermediate layer for promoting adhesion between the insulating support and the film.

**12.** Apparatus according to claim 11, characterized in that the intermediate adhesion promoting layer is constituted by at least one monomolecular layer of ω-tricosenoique acid.

## Patentansprüche

**1.** Verfahren zum Nachweis molekularer oder ionischer Spezies, dadurch gekennzeichnet, daß es darin besteht,

a) - ein gasförmiges oder flüssiges Medium, das die nachzuweisende Spezies enthält, mit einem Film in Kontakt zu bringen, der wenigstens eine monomolekulare Schicht einer amphiphilen Verbindung enthält, die gewählt ist unter den Charge-transfer-Komplexen des Tetracyanochinodimethans (TCNQ) und den Salzen des Tetracyanochinodimethans (TCNQ), die elektrisch leitend oder Vorläufer elektrisch leitender Charge-transfer-Komplexe sind, und

b) - die Veränderung des elektrischen Widerstandes oder der optischen Absorption des Films zu bestimmen.

**2.** Verfahren nach Anspruch 1, dadurch gekennzeichnet, daß der Film aus mehreren monomolekularen Schichten gebildet wird, die abwechselnd aus einer monomolekularen Schicht der genannten amphiphilen Verbindung, die gewählt wird unter den Charge-transfer-Komplexen des TCNQ und den Salzen des TCNQ, die elektrisch leitend oder Vorläufer elektrisch leitender Charge-transfer-Komplexe sind, und einer monomolekularen Schicht einer anderen amphiphilen Verbindung bestehen.

**3.** Verfahren nach einem der Ansprüche 1 und 2, dadurch gekennzeichnet, daß die unter den Charge-transfer-Komplexen und den Salzen des TCNQ gewählte amphiphile Verbindung der Formel $DA_xX_y$ entspricht, worin D eine organische monomere Elektronendonorgruppe bedeutet, A das 7,7,8,8-Tetracyanochinodimethan oder eines seiner substituierten Derivate bedeutet, X einen nicht amphiphilen Elektronenakzeptor, der unter den Lewis-Säuren gewählt ist, bedeutet, x eine Zahl gleich oder größer als 1 ist und y gleich oder größer als Null ist, wobei wenigstens eine der Gruppen D und A amphiphil ist und wenigstens einen gesättigten oder ungesättigten kohlenwasserstoffhaltigen Substituenten mit wenigstens 12 Kohlenstoffatomen enthält.

**4.** Verfahren nach Anspruch 3, dadurch gekennzeichnet, daß der Komplex oder das Salz des TCNQ unter Alkyl-ammonium-TCNQ, Alkyl-pyridinium-TCNQ, Alkyl-chinolinium-TCNQ, Alkyl-sulfonium-TCNQ, Alkyl-phosphonium-TCNQ und N-Alkyl-alkylisonicotinat-TCNQ gewählt wird.

**5.** Verfahren nach einem der Ansprüche 3 und 4, dadurch gekennzeichnet, daß die nachzuweisende Spezies unter Iod, den Stickstoffoxiden der Formel $NO_z$, wobei z von 1 bis 3 geht, und fluorhaltigen Verbindungen wie $AsF_5$, $BF_3$, $PF_5$ gewählt wird.

**6.** Verfahren nach Anspruch 3, dadurch gekennzeichnet, daß der TCNQ-Komplex ein Alkylpyridiniumiodid-TCNQ ist.

**7.** Verfahren nach den Ansprüchen 2 und 3, dadurch gekennzeichnet, daß der Film aus monomolekularen Schichten besteht, die abwechselnd aus einer ersten, aus einem Alkyl-pyridiniumiodid-TCNQ bestehenden Verbindung und einer zweiten, aus dem Behenylalkohol bestehenden Verbindung gebildet werden.

**8.** Verfahren nach einem der Ansprüche 6 und 7, dadurch gekennzeichnet, daß die nachzuweisende Spezies Ammoniak, ein Stickstoffoxid der Formel $NO_z$, wobei z von 1 bis 3 geht, oder Benzol ist.

**9.** Vorrichtung zum Nachweis molekularer oder ionischer Spezies, dadurch gekennzeichnet, daß sie einen Träger, der mit einem Film überzogen ist, der wenigstens eine monomolekulare Schicht umfaßt, die aus einer amphiphilen Verbindung besteht, die unter den Charge-transfer-Komplexen des TCNQ und den Salzen des TCNQ, die elektrisch leitend oder Vorläufer elektrisch leitender Charge-transfer-Komplexe sind, gewählt ist, sowie elektrische Kontakte umfaßt, um den elektrischen Widerstand des Films zu messen.

**10.** Vorrichtung nach Anspruch 9, dadurch gekennzeichnet, daß der Träger aus elektrisch isolierendem Material besteht.

**11.** Vorrichtung nach einem der Ansprüche 9 und 10, dadurch gekennzeichnet, daß sie eine Zwischenschicht eines Haftvermittlers zwischen dem isolierenden Träger und dem Film umfaßt.

**12.** Vorrichtung nach Anspruch 11, dadurch gekennzeichnet, daß die Zwischenschicht des Haftvermittlers aus wenigstens einer monomolekularen Schicht von $\omega$-Tricosensäure besteht.

FIG. 1

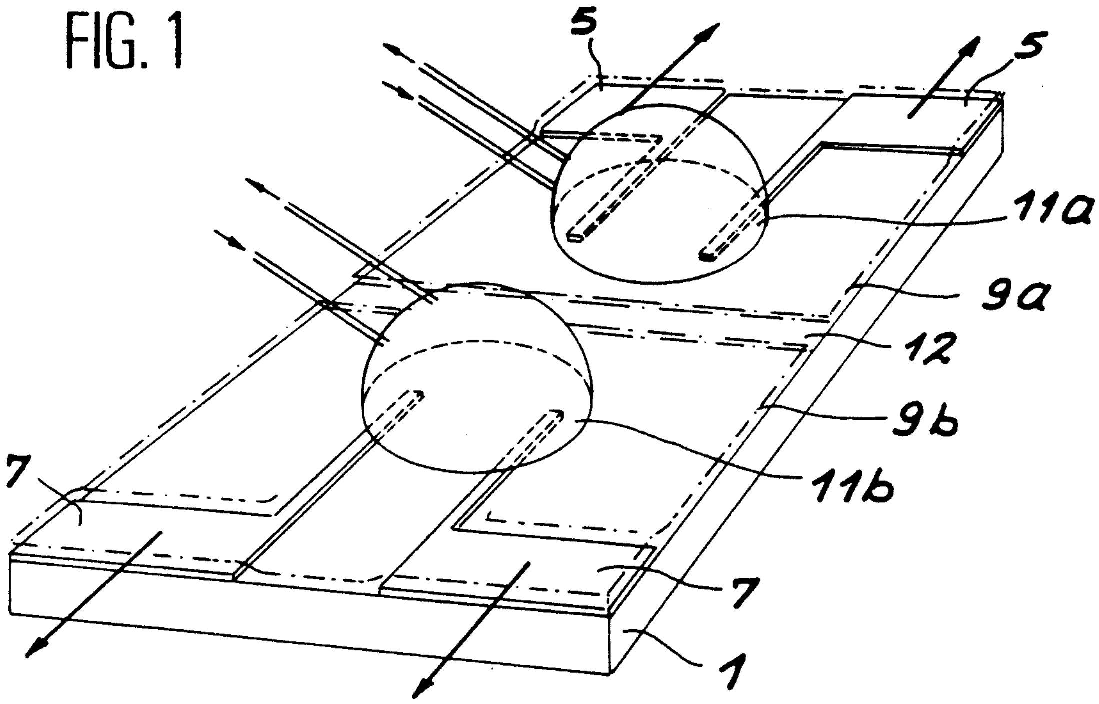


FIG. 2